# EUROPEAN PATENT SPECIFICATION

(11) **EP 4 255 708 B1**
(45) Date of publication and mention of the grant of the patent: **25.09.2024**
(21) Application number: 21820620.9
(22) Date of filing: 06.12.2021
(51) Int. Cl.: B29C 45/00, C08L 23/12, H01M 50/121

(54) **POLYPROPYLENE COMPOSITION WITH IMPROVED STRESS WHITENING PERFORMANCE**
POLYPROPYLENZUSAMMENSETZUNG MIT VERBESSERTER WEISSBRUCHLEISTUNG
COMPOSITION DE POLYPROPYLÈNE PRÉSENTANT UNE PERFORMANCE AMÉLIORÉE DE BLANCHIMENT SOUS CONTRAINTE

(30) Priority: 07.12.2020 WO PCT/CN2020/134247
(43) Date of publication of application: 11.10.2023
(73) Proprietor: SABIC Global Technologies B.V., 4612 PX Bergen op Zoom (NL)
(72) Inventor: HUANG, Ting, 6160 GA Geleen (NL); JIANG, Chaodong, 6160 GA Geleen (NL); YANG, Yang, 6160GA Geleen (NL); SHI, Hongtao, 6160 GA Geleen (NL); KONG, Xin, 6160GA Geleen (NL); GREIN, Christelle Marie Helene, 6160 GA Geleen (NL); LI, Chunfa, 6160 GA Geleen (NL)
(74) Representative: Sabic Intellectual Property Group
(86) International application number: PCT/EP2021/084318
(87) International publication number: WO 2022/122614

(56) References cited:
- EP-A1- 3 234 008
- EP-A2- 3 395 882
- EP-B1- 3 234 008
- WO-A1-2020/091621
- US-A- 5 362 782

## Description

The present invention relates to a polypropylene composition and the process for the preparation of the polypropylene composition. The present invention also relates to a battery case comprising the polypropylene composition. The present invention further relates to the use of the polypropylene composition in a battery case.

It is know that polypropylene based material can be used automotive as battery case. For example: EP3234008B1 discloses a new injection molded article with improved stress whitening, said article comprises a polypropylene composition based on a heterophasic propylene copolymer and low amounts of inorganic filler. The injection molded articles show a good stiffness/impact balance paired with outstanding stress whitening resistance. The article is preferably a battery case.

There is still further need to improve the stiffness and stress whitening resistance of the material used as battery case.

It is the object of the present invention to provide a polymer composition with improved stress whitening resistance while having superior stiffness.

In the context of the present invention, stiffness is quantified by flexural strength as measured according to ASTM D790-17. "superior stiffness" means the flexural strength of the polymer composition is at least 30.0 MPa.

The object of the invention is achieved by a polymer composition comprising (A) a polypropylene, (B1) a first copolymer of ethylene and α-olefin having a density of 0.891 to 0.912 g/cm³ as measured according to ASTM D792-13, (B2) a second copolymer of ethylene and α-olefin having a density in the range of 0.859 to 0.881 as measured according to ASTM D792-13, wherein the amount of (A) the polypropylene is in the range from 71 to 87 wt% based on the total amount of the polymer composition, wherein the ratio between the amount of the (B2) second copolymer of ethylene and α-olefin and the amount of the (B1) first copolymer of ethylene and α-olefin is in the range from 3.8 to 1.0.

The inventor of the present invention surprisingly found the composition according to the invention has improved stress whitening resistance while maintaining sufficient stiffness.

### Polypropylene (A)

The polypropylene (A) according to the invention may be a propylene homopolymer, a propylene random copolymer or a heterophasic propylene copolymer.

Preferably the polypropylene (A) according to the invention is a propylene homopolymer. As a propylene homopolymer is more likely to provide sufficient stiffness to the polymer composition.

The process to produce polypropylene is known in the art. Preferably the polypropylene of the present invention is produced in a sequential polymerization process comprising at least two reactors, more preferably the polypropylene of the present invention is produced in a sequential polymerization process comprising at least three reactors.

The catalyst to produce polypropylene is also know in the art, for example Ziegler-Natta catalyst, metallocene catalyst. Preferably the catalyst used to produce the polypropylene of the present invention is a Ziegler-Natta catalyst which is free of phthalate, for example the catalyst comprises compounds of a transition metal of Group 4 to 6 of IUPAC, a Group 2 metal compound and an internal donor wherein said internal donor is a compound selected from a list consisting of substituted malonates, maleates, succinates, glutarates, cyclohexene-1,2-dicarboxylates, benzoates and derivatives and/or mixtures thereof, preferably the internal donor is a citraconate.

Preferably the polymer in the polymer composition of the present invention is a polypropylene, wherein the melt flow index (MFI) of the polypropylene is in the range from 1.9 to 17.8 dg/min, preferably in the range from 2.3 to 11.2 dg/min, even more preferably in the range from 2.9 to 6.2 dg/min as measured according to ISO 1133-1:2011 at 230 °C under a 2.16 kg load.

### Copolymers of ethylene and α-olefin

The composition of the invention comprises (B1) a first copolymer of ethylene and α-olefin and (B2)a second copolymer of ethylene and α-olefin.

The α-olefin comonomer in the (B1) first copolymer of ethylene and α-olefin is preferably derived from the group consisting of 1-butene, 1-hexene and 1-octene, more preferably the α-olefin comonomer in the (B1) first copolymer of ethylene and α-olefin is derived from 1-octene.

The α-olefin comonomer in the (B2) second copolymer of ethylene and α-olefin is preferably derived from the group consisting of 1-butene, 1-hexene and 1-octene, more preferably the α-olefin comonomer in the (B2) second copolymer of ethylene and α-olefin is derived from 1-octene.

The (B1) first copolymer of ethylene and α-olefin has a density in the range of 0.891 to 0.912 g/cm³, preferably in the range of 0.895 to 0.907 g/cm³ as measured according to ASTM D792-13.

The (B2) second copolymer of ethylene and α-olefin has a density in the range of 0.859 to 0.881 g/cm³, preferably in the range of 0.863 to 0.872 g/cm³ as measured according to ASTM D792-13.

Copolymers which are suitable for use in the current invention are commercially available for example under the trademark EXACT^{™} available from Exxon Chemical Company of Houston, Texas or under the trademark ENGAGE^{™} polymers, a line of metallocene catalyzed plastomers available from Dow Chemical Company of Midland, Michigan or Cohere^{™} and Fortify^{™} from SABIC.

The copolymers may be prepared using methods known in the art, for example by using a single site catalyst, i.e., a catalyst the transition metal components of which is an organometallic compound and at least one ligand of which has a cyclopentadienyl anion structure through which such ligand bondingly coordinates to the transition metal cation. This type of catalyst is also known as "metallocene" catalyst. Metallocene catalysts are for example described in U.S. Patent Nos. 5,017,714 and 5,324,820. The copolymers may also be prepared using traditional types of heterogeneous multi-sited Ziegler-Natta catalysts.

Preferably the melt flow index (MFI) of (B1) first copolymer of ethylene and α-olefin is in the range from 0.5 to 2.3 dg/min, more preferably in the range from 0.7 to 1.6 dg/min as measured according to ISO 1133-1:2011 at 190 °C under a 2.16 kg load.

Preferably the MFI of (B2) second copolymer of ethylene and α-olefin is in the range from 0.4 to 3.2 dg/min, more preferably in the range from 0.8 to 1.8 dg/min as measured according to ISO 1133-1:2011 at 190 °C under a 2.16 kg load.

Preferably the ratio between the MFI of the (B1) first copolymer of ethylene and α-olefin and the MFI of the (B2) second copolymer of ethylene and α-olefin is in the range from 0.5 to 2.3, preferably in the range from 0.7 to 1.4, wherein the MFI of the (B1) first copolymer of ethylene and α-olefin and the MFI of the (B2) second copolymer of ethylene and α-olefin is measured according to ISO 1133-1:2011 at 190 °C under a 2.16 kg load.

The first copolymer and the second copolymer may be melt-mixed with the other components by adding them as separate components. Alternatively, the first copolymer and the second copolymer may be added as one component after melt-mixing the first copolymer and the second copolymer.

Alternatively, the first copolymer and the second copolymer may be added as one component produced as a bimodal copolymer made by polymerizing the first (or second) copolymer and subsequently polymerizing the second (or first) copolymer in the presence of the first (or second) copolymer. In this case, the first copolymer and the second copolymer may be polymerized in the same reactor or different reactors. It is understood that a bimodal copolymer has a molecular weight distribution having two peaks corresponding to the first median and the second median of the respective stages in the polymerization.

### Polymer composition

The amount of the (A) polypropylene in the polymer composition is in the range from 71 to 87 wt% based on the total amount of the polymer composition.

The total amount of (B1) the first copolymer of ethylene and α-olefin and (B2) the second copolymer of ethylene and α-olefin is preferably in the range from 15 to 29 wt% based on the total amount of the polymer composition.

The ratio between the amount of the (B2) second copolymer of ethylene and α-olefin and the amount of the (B1) first copolymer of ethylene and α-olefin is in the range from 3.8 to 1.0, preferably in the range from 3.5 to 1.2, even preferably in the range from 2.6 to 1.8.

The MFI of the polymer composition is preferably in the range from 2.8 to 23 g/10min, more preferably in the range from 3.0 to 9.2 g/10min as measured according to ISO 1133-1:2011 at 230 °C under a 2.16 kg load.

The polymer composition according to the invention may further additives, e.g. stabilizer, nucleating agent.

The polymer composition can be prepared in a conventional compounding process or by dry blending during an injection moulding process. Preferably the polymer composition is prepared in a compounding process.

In one embodiment of the present invention, the polymer composition comprises at most 3.5 wt% inorganic filler, wherein the inorganic filler may be talc or glass fiber.

The present invention also relates to a battery case, wherein the battery case comprises the polymer composition according to the invention.

Preferably the amount of the polymer composition is at least 95 wt%, more preferably at least 98 wt% based on the total amount of the battery case.

A battery case is an enclosure of battery, wherein preferably the battery is an automotive battery, wherein preferably the battery is a lead acid battery.

The present invention further relates a process for the preparation of a battery case comprising the comprising the following sequential steps:
- Preparing the polymer composition of the invention by compounding;
- Injection moulding the polymer composition obtained from the previous step into a battery case.

The present invention also relates to the use of the polymer composition according to the invention in a battery case.

### Experiment

### Polypropylene

PP: PP2832E1(1080K) is a propylene homopolymer commercially available from FREP, it has an MFI of 3.4 g/10min as measured according to ISO 1133-1:2011 at 230 °C under a 2.16 kg load.

### Copolymers of ethylene and α-olefin

Copolymers of ethylene and α-olefin as shown in Table 1 were used. The MFI shown below was measured according to ISO 1133-1:2011 at 190 °C under a 2.16 kg load. The density was measured according to ASTM D792-13.

**Table 1**

| Copolymer | Supplier | Grade name | α-olefin comonomer | MFI @ 190 ºC | Density (g/cm³) |
|---|---|---|---|---|---|
| COP1 | SABIC | LLDPE 118NJ | Butene | 1.0 | 0.918 |
| COP2 | ExxonMobil | Vistamaxx^{™} 6102 | Propylene | 1.4 | 0.862 |
| COP3 | SABIC | Cohere^{™} 8102 | Octene | 1.0 | 0.902 |
| COP4 | SABIC | Fortify^{™} C1085 | Octene | 1.0 | 0.885 |
| COP5 | SABIC | Fortify^{™} C1070D | Octene | 1.0 | 0.868 |
| COP6 | LG Chem | Lucene^{™} LC175 | Butene | 1.1 | 0.870 |

Additive package: The additive package used in the present invention comprise conventional stabilizers for polyolefin. The same type and amount of stabilizers were used in all the examples.

### Specimen preparation

Pellets of the examples were prepared by compounding the ingredients in a Coperion ZSK 26 twin screw extruder under the following settings:
Zone 1-9 temperature: 50°C - 80°C - 175°C - 175°C - 160°C - 160°C - 160°C - 150°C - 150°C;
Throughput: 15 kg/h;
Rotation speed: 300 RPM.
Composition of samples are illustrated in Table 2
Then the pellets of examples were provided to an injection molding machine (FANAC S-2000i type) to prepare specimens for the following measurements.

### Measurement

Flexural strength: Flexural strength was measured according to ASTM D790-17. The measurement was taken at 23 °C.

Melt flow index (MFI): Measurement on the MFI of the examples was carried out using the pellets of examples obtained after the compound step according to ISO
Stress whitening: Samples were injection moulded into plaques with dimension: 250*250*2 mm. The measurement was taken at 23 °C.

The stress whitening test was performed on a customized machine. The customized machine comprises two parts: A weight release mechanism and a plaque support.

The weight release mechanism is able to release a metallic ball with 500 gram weight and 50 mm diameter from a height H1 (in Table 2) with 0 initial velocity as a free falling object to create stress whitening on the test plaque.

The plaque support comprises two square-shape metallic clamps with open space in the centre, the shape of the open space is also square. The outside dimensions of the clamps is 250*250 mm and inside dimension of the clamps is 230*230 mm. The horizontal geometric centre of the outer square superposes with that of the inner square. When a plaque is installed on the plaque support, it is fixed horizontally by compression between the clamps and the horizontal geometric centre of the plaque superposes with that of the clamps.

The weight release mechanism and the plaque support are positioned in a way that the falling weight impact is created perpendicularly on the plaque surface. The horizontal geometric centre of the plaque superposes with that of the impact point.

After the falling impact, the plaque was checked visually whether a whitening part is present on its surface. A rating 1 is given to a plaque without any visible stress whitening, a rating of 0 is given to a plaque with visible stress whitening. 10 plaques were tested for each formulation and the sum of the stress whitening rating for each formulation was calculated.

**Table 2 Formulation of samples and result of measurement**

| | **CE1** | **CE3** | **CE4** | **CE5** | **CE6** | **CE7** | **CE8** | **EX1** | **EX2** | **CE9** |
|---|---|---|---|---|---|---|---|---|---|---|
| PP (wt%) | 74.56 | 74.56 | 74.56 | 79.65 | 74.56 | 74.56 | 69.56 | 72.56 | 74.56 | 74.56 |
| COP1 (wt%) | 25 | | | | | | | | | |
| COP2 (wt%) | | | | | 5 | | | | | |
| COP3 (wt%) | | | | | | 5 | 10 | 9 | 8 | |
| COP4 (wt%) | | 25 | | | | | | | | |
| COP5 (wt%) | | | 25 | 20 | 20 | 20 | 20 | 18 | 17 | |
| COP6 (wt%) | | | | | | | | | | 25 |
| Weight ratio COP5/COP3 | | | | | | 4.0 | 2.0 | 2.0 | 2.1 | |
| Additive package (wt%) | 0.44 | 0.44 | 0.44 | 0.44 | 0.44 | 0.44 | 0.44 | 0.44 | 0.44 | 0.44 |
| MFI (g/10min) | 3.4 | 3.7 | 3.8 | 4.1 | 3.9 | 3.5 | 4.0 | 3.8 | 4.0 | 4.0 |
| Flexural strength (MPa) | 37.3 | 33.1 | 32.5 | 35.6 | 27.2 | 34.0 | 29.0 | 32.3 | 33.1 | 32.1 |
| Stress whitening rating H1 = 70 mm | * | 0 | 0 | 0 | 0 | 5 | 8 | 9 | 10 | 0 |
| Stress whitening rating H1 = 300 mm | * | 0 | 0 | 0 | 0 | 0 | 0 | 9 | 9 | 0 |

| | | | | | | | | | | |
|---|---|---|---|---|---|---|---|---|---|---|
| * Sample broke upon falling impact | | | | | | | | | | |

The satisfy the requirement for battery case, the stress whitening rating at H1=70mm and
H1=30mm needs to be at least 8. It is clear from the data that only inventive examples EX1 and EX2 satisfy this requirement.

## Claims

1. A polymer composition comprising (A) a polypropylene, (B1) a first copolymer of ethylene and α-olefin having a density of 0.891 to 0.912 g/cm³ as measured according to ASTM D792-13, (B2) a second copolymer of ethylene and α-olefin having a density in the range of 0.859 to 0.881 g/cm³ as measured according to ASTM D792-13, wherein the amount of (A) the polypropylene is in the range from 71 to 87 wt% based on the total amount of the polymer composition, wherein the ratio between the amount of the (B2) second copolymer of ethylene and α-olefin and the amount of the (B1) first copolymer of ethylene and α-olefin is in the range from 3.8 to 1.0.

2. The polymer composition according to claim 1 wherein the ratio between the amount of the (B2) second copolymer of ethylene and α-olefin and the amount of the (B1) first copolymer of ethylene and α-olefin is in the range from 3.5 to 1.2, preferably in the range from 2.6 to 1.8.

3. The polymer composition according to claim 1 or 2 wherein the melt flow index (MFI) of the polypropylene is in the range from 1.9 to 17.8 dg/min, preferably in the range from 2.3 to 11.2 dg/min, even more preferably in the range from 2.9 to 6.2 dg/min as measured according to ISO 1133-1:2011 at 230 °C under a 2.16 kg load.

4. The polymer composition according to any one of the previous claims wherein the α-olefin comonomer in the (B1) first copolymer of ethylene and α-olefin comonomer is derived from the group consisting of 1-butene, 1-hexene and 1-octene, preferably the α-olefin comonomer in the (B1) first copolymer of ethylene and α-olefin comonomer is derived from 1-octene.

5. The polymer composition according to any one of the previous claims wherein the α-olefin comonomer in the (B2) second copolymer of ethylene and α-olefin comonomer is derived from the group consisting of 1-butene, 1-hexene and 1-octene, preferably the α-olefin comonomer in the (B2) second copolymer of ethylene and α-olefin comonomer is derived from 1-octene.

6. The polymer composition according to any one of the previous claims wherein the (A) polypropylene is a propylene homopolymer.

7. The polymer composition according to any one of the previous claims wherein the ratio between the MFI of the (B1) first copolymer of ethylene and α-olefin and the MFI of the (B2) second copolymer of ethylene and α-olefin is in the range from 0.5 to 2.3, preferably in the range from 0.7 to 1.4, wherein the MFI of the (B1) first copolymer of ethylene and α-olefin and the MFI of the (B2) second copolymer of ethylene and α-olefin is measured according to ISO 1133-1:2011 at 190 °C under a 2.16 kg load.

8. The polymer composition according to any one of the previous claims wherein the MFI of (B1) first copolymer of ethylene and α-olefin is in the range from 0.5 to 2.3 dg/min, preferably in the range from 0.7 to 1.6 dg/min as measured according to ISO 1133-1:2011 at 190 °C under a 2.16 kg load.

9. The polymer composition according to any one of the previous claims wherein the MFI of (B2) second copolymer of ethylene and α-olefin is in the range from 0.4 to 3.2 dg/min, preferably in the range from 0.8 to 1.8 dg/min as measured according to ISO 1133-1:2011 at 190 °C under a 2.16 kg load.

10. The polymer composition according to any one of the previous claims wherein the MFI of the polymer composition is in the range from 2.8 to 23 g/10min, preferably in the range from 3.0 to 9.2 g/10min as measured according to ISO 1133-1:2011 at 230 °C under a 2.16 kg load.

11. A battery case comprising the polymer composition of any one of the previous claims.

12. A process for the preparation of a battery case comprising the following sequential steps:
- Preparing the polymer composition of any one of claims 1 to 10 by compounding;
- Injection moulding the polymer composition obtained from the previous step into a battery case.

13. Use of the polymer composition of any one of claims 1 to 10 in a battery case.

## Patentansprüche

1. Polymerzusammensetzung, umfassend (A) ein Polypropylen, (B1) ein erstes Copolymer von Ethylen und α-Olefin, das eine Dichte von 0,891 bis 0,912 g/cm³ aufweist, gemessen nach ASTM D792-13, (B2) ein zweites Copolymer von Ethylen und α-Olefin, das eine Dichte im Bereich von 0,859 bis 0,881 g/cm³ aufweist, gemessen nach ASTM D792-13, wobei die Menge (A) des Polypropylens im Bereich von 71 bis 87 Gew.-% liegt, basierend auf der Gesamtmenge der Polymerzusammensetzung, wobei das Verhältnis zwischen der Menge des (B2) zweiten Copolymers von Ethylen und α-Olefin und der Menge des (B1) ersten Copolymers von Ethylen und α-Olefin im Bereich von 3,8 bis 1,0 liegt.

2. Polymerzusammensetzung nach Anspruch 1, wobei das Verhältnis zwischen der Menge des (B2) zweiten Copolymers von Ethylen und α-Olefin und der Menge des (B1) ersten Copolymers von Ethylen und α-Olefin im Bereich von 3,5 bis 1,2, bevorzugt im Bereich von 2,6 bis 1,8 liegt.

3. Polymerzusammensetzung nach Anspruch 1 oder 2, wobei der Schmelzflussindex (MFI) des Polypropylens im Bereich von 1,9 bis 17,8 dg/min, bevorzugt im Bereich von 2,3 bis 11,2 dg/min, noch bevorzugter im Bereich von 2,9 bis 6,2 dg/min liegt, gemessen nach ISO 1133-1:2011 bei 230 °C unter einer Last von 2,16 kg.

4. Polymerzusammensetzung nach einem der vorstehenden Ansprüche, wobei das α-Olefin-Comonomer in dem (B1) ersten Copolymer von Ethylen und α-Olefin-Comonomer von der Gruppe bestehend aus 1-Buten, 1-Hexen und 1-Octen abgeleitet ist, bevorzugt das α-Olefin-Comonomer in dem (B1) ersten Copolymer von Ethylen und α-Olefin-Comonomer von 1-Octen abgeleitet ist.

5. Polymerzusammensetzung nach einem der vorstehenden Ansprüche, wobei das α-Olefin-Comonomer in dem (B2) zweiten Copolymer von Ethylen und α-Olefin-Comonomer von der Gruppe bestehend aus 1-Buten, 1-Hexen und 1-Octen abgeleitet ist, bevorzugt das α-Olefin-Comonomer in dem (B2) zweiten Copolymer von Ethylen und α-Olefin-Comonomer von 1-Octen abgeleitet ist.

6. Polymerzusammensetzung nach einem der vorstehenden Ansprüche, wobei es sich bei dem (A) Polypropylen um ein Propylenhomopolymer handelt.

7. Polymerzusammensetzung nach einem der vorstehenden Ansprüche, wobei das Verhältnis zwischen dem MFI des (B1) ersten Copolymers von Ethylen und α-Olefin und dem MFI des (B2) zweiten Copolymers von Ethylen und α-Olefin im Bereich von 0,5 bis 2,3, bevorzugt im Bereich von 0,7 bis 1,4 liegt, wobei der MFI des (B1) ersten Copolymers von Ethylen und α-Olefin und der MFI des (B2) zweiten Copolymers von Ethylen und α-Olefin nach ISO 1133-1:2011 bei 190 °C unter einer Last von 2,16 kg gemessen wird.

8. Polymerzusammensetzung nach einem der vorstehenden Ansprüche, wobei der MFI des (B1) ersten Copolymers von Ethylen und α-Olefin im Bereich von 0,5 bis 2,3 dg/min, bevorzugt im Bereich von 0,7 bis 1,6 dg/min liegt, gemessen nach ISO 1133-1:2011 bei 190 °C unter einer Last von 2,16 kg.

9. Polymerzusammensetzung nach einem der vorstehenden Ansprüche, wobei der MFI des (B2) zweiten Copolymers von Ethylen und α-Olefin im Bereich von 0,4 bis 3,2 dg/min, bevorzugt im Bereich von 0,8 bis 1,8 dg/min liegt, gemessen nach ISO 1133-1:2011 bei 190 °C unter einer Last von 2,16 kg.

10. Polymerzusammensetzung nach einem der vorstehenden Ansprüche, wobei der MFI der Polymerzusammensetzung im Bereich von 2,8 bis 23 g/10 min, bevorzugt im Bereich von 3,0 bis 9,2 g/10 min liegt, gemessen nach ISO 1133-1:2011 bei 230 °C unter einer Last von 2,16 kg.

11. Batteriegehäuse, umfassend die Polymerzusammensetzung nach einem der vorstehenden Ansprüche.

12. Verfahren für die Herstellung eines Batteriegehäuses, umfassend die folgenden aufeinanderfolgenden Schritte:
- Herstellen der Polymerzusammensetzung nach einem der Ansprüche 1 bis 10 durch Compoundieren;
- Spritzgießen der Polymerzusammensetzung, die aus dem vorhergehenden Schritt erhalten wurde, zu einem Batteriegehäuse.

13. Verwendung der Polymerzusammensetzung nach einem der Ansprüche 1 bis 10 in einem Batteriegehäuse.

## Revendications

1. Composition polymère comprenant (A) un polypropylène, (B1) un premier copolymère d'éthylène et d'a-oléfine présentant une densité de 0,891 à 0,912 g/cm³ telle que mesurée selon la norme ASTM D792-13, (B2) un second copolymère d'éthylène et d'a-oléfine présentant une densité comprise dans la plage de 0,859 à 0,881 g/cm³ telle que mesurée selon la norme ASTM D792-13, dans laquelle la quantité du (A) polypropylène est comprise dans la plage de 71 à 87 % en poids sur la base de la quantité totale de la composition polymère, dans laquelle le rapport entre la quantité du (B2) second copolymère d'éthylène et d'a-oléfine et la quantité du (B1) premier copolymère d'éthylène et d'a-oléfine est compris dans la plage de 3,8 à 1,0.

2. Composition polymère selon la revendication 1, dans laquelle le rapport entre la quantité du (B2) second copolymère d'éthylène et d'a-oléfine et la quantité du (B1) premier copolymère d'éthylène et d'a-oléfine est compris dans la plage de 3,5 à 1,2, de préférence compris dans la plage de 2,6 à 1,8.

3. Composition polymère selon la revendication 1 ou 2, dans laquelle l'indice de fluidité à chaud (MFI) du polypropylène est compris dans la plage de 1,9 à 17,8 dg/min, de préférence dans la plage de 2,3 à 11,2 dg/min, encore plus préférentiellement dans la plage de 2,9 à 6,2 dg/min, tel que mesuré selon la norme ISO 1133-1:2011 à 230 °C sous une charge de 2,16 kg.

4. Composition polymère selon l'une quelconque des revendications précédentes, dans laquelle le comonomère α-oléfinique dans le (B1) premier copolymère d'éthylène et de comonomère α-oléfinique est dérivé du groupe consistant en 1-butène, 1-hexène et 1-octène, de préférence, le comonomère α-oléfinique dans le (B1) premier copolymère d'éthylène et de comonomère α-oléfinique est dérivé du 1-octène.

5. Composition polymère selon l'une quelconque des revendications précédentes, dans laquelle le comonomère α-oléfinique dans le (B2) second copolymère d'éthylène et de comonomère α-oléfinique est dérivé du groupe consistant en 1-butène, 1-hexène et 1-octène, de préférence, le comonomère α-oléfinique dans le (B2) second copolymère d'éthylène et de comonomère α-oléfinique est dérivé du 1-octène.

6. Composition polymère selon l'une quelconque des revendications précédentes, dans laquelle le (A) polypropylène est un homopolymère de propylène.

7. Composition polymère selon l'une quelconque des revendications précédentes, dans laquelle le rapport entre le MFI du (B1) premier copolymère d'éthylène et d'a-oléfine et le MFI du (B2) second copolymère d'éthylène et d'a-oléfine est compris dans la plage de 0,5 à 2,3, de préférence dans la plage de 0,7 à 1,4, dans laquelle le MFI du (B1) premier copolymère d'éthylène et d'a-oléfine et le MFI du (B2) second copolymère d'éthylène et d'a-oléfine sont mesurés selon la norme ISO 1133-1:2011 à 190 °C sous une charge de 2,16 kg.

8. Composition polymère selon l'une quelconque des revendications précédentes, dans laquelle le MFI du (B1) premier copolymère d'éthylène et d'a-oléfine est compris dans la plage de 0,5 à 2,3 dg/min, de préférence dans la plage de 0,7 à 1,6 dg/min tel que mesuré selon la norme ISO 1133-1:2011 à 190 °C sous une charge de 2,16 kg.

9. Composition polymère selon l'une quelconque des revendications précédentes, dans laquelle le MFI du (B2) second copolymère d'éthylène et d'a-oléfine est compris dans la plage de 0,4 à 3,2 dg/min, de préférence dans la plage de 0,8 à 1,8 dg/min tel que mesuré selon la norme ISO 1133-1:2011 à 190 °C sous une charge de 2,16 kg.

10. Composition polymère selon l'une quelconque des revendications précédentes, dans laquelle le MFI de la composition polymère est compris dans la plage de 2,8 à 23 g/min, de préférence dans la plage de 3,0 à 9,2 g/min tel que mesuré selon la norme ISO 1133-1:2011 à 230 °C sous une charge de 2,16 kg.

11. Boîtier de batterie comprenant la composition polymère selon l'une quelconque des revendications précédentes.

12. Processus de préparation d'un boîtier de batterie comprenant les étapes séquentielles suivantes :
- la préparation de la composition polymère selon l'une quelconque des revendications 1 à 10 par mélange ;
- le moulage par injection de la composition polymère obtenue à l'étape précédente dans un boîtier de batterie.

13. Utilisation de la composition polymère selon l'une quelconque des revendications 1 à 10 dans un boîtier de batterie.
